# EUROPÄISCHE PATENTSCHRIFT

(11) **EP 0 758 007 B1**
(45) Veröffentlichungstag und Bekanntmachung des Hinweises auf die Patenterteilung: **24.10.2001**
(21) Anmeldenummer: 96111979.9
(22) Anmeldetag: 25.07.1996
(51) Int. Cl.: C09D 151/08, C08F 283/06

(54) **Wässrige, vernetzbare Bindemitteldispersionen mit niedrigem Lösemittelgehalt**
Low solvent aqueous crosslinkable binder dispersions
Dispersions aqueuses de liants réticulables contenant peu de solvant

(30) Priorität: 07.08.1995 DE 19528939
(43) Veröffentlichungstag der Anmeldung: 12.02.1997
(73) Patentinhaber: BAYER AG, 51368 Leverkusen (DE)
(72) Erfinder: Blum, Harald, Dr., 47669 Wachtendonk (DE); Sickert, Armin, 47800 Krefeld (DE); Hovestadt, Wieland, Dr., 47800 Krefeld (DE)

(56) Entgegenhaltungen:
- EP-A- 0 027 719
- EP-A- 0 503 866
- DE-A- 4 123 080
- US-A- 4 272 619

## Beschreibung

Die Erfindung betrifft wässrige, vernetzbare Bindemitteldispersionen mit niedrigem Lösemittelgehalt auf Basis von hydroxyfunktionellen Polyethern und hydroxyfunktionellen Acrylatcopolymerisaten, ein Verfahren zur Herstellung solcher Bindemittel, Bindemittelkombinationen auf dieser Basis und die Verwendung der Dispersionen in Lacken.

EP-A-0 027 719 beschreibt Mischungen aus nicht wässrigen Dispersionen vernetzter Polyacrylat-Teilchen (*N*on *A*queous *D*ispersions) mit lösemittelhaltigen Polyacrylat-, Polyether- oder Polyesterharzen in Kombination mit Melamin-Vemetzerharzen für Einbrennbeschichtungen. Diese Mischungen haben Lösemittelgehalte bis 40%.

Es ist bekannt, in Beschichtungssytemen (Paint & Resin 12/83, S. 34 ff., DE-A 3 209 421, EP-A 95 263, EP-A 105 293, EP-A 133 949, EP-A 288 763, DE-A 4 202 212 und dort zitierte Literatur) wasserverdünnbare Bindemittel auf Copolymerbasis einzusetzen, die Emulgatoren zur Stabilisierung enthalten oder noch größere Anteile organischer Colösemittel aufweisen. Die Emulgatoren beeinflussen in der Regel die Eigenschaften der Lacke bzw. der Besichichtungen, wie z.B. Wasserfestigkeit, Filmoptik (Glanz), Pigmentierfähigkeit negativ.

Die durch die Emulgatoren in das Harz eingeführten hydrophilen Gruppen können ionische Gruppen, nichtionische Gruppen oder eine Kombination beider Arten sein. Nichtionische hydrophile Gruppen müssen dabei in der Regel - verglichen mit ionischen Gruppen - in deutlich größeren Mengenanteilen in einer Dispersion vorhanden sein, um diese ausreichend zu stabilisieren. So beschreibt z.B. DE-A-41 23 080 mit Polyethylenoxidgruppen stabilisierte Polyacrylat-Primärdispersionen, die in Abmischung mit Polyether- und Polyesterharzen als Bindemittelkomponente in Grundierungen zur Lackierung von Kunststoffsubstraten eingesetzt werden.

Die Verwendung größerer Mengen organischer Lösemittel bei der Herstellung wässriger Sekundärcopolymerdispersionen ist einerseits herstellungsbedingt, da dadurch ein kontrollierter Wärmetausch, eine rührfähige Viskosität und die Mindestfüllmenge des Reaktors bei der Herstellung der zunächst organisch gelösten Polymeren gewährleistet wird, andererseits in der Regel für die Lackeigenschaften, wie Lagerstabilität, Pigmentbenetzung, Filmoptik, Verlauf usw. vorteilhaft.

Die Verwendung größerer Lösemittelmengen in Bindemitteln bzw. Lacken ist aus ökologischen Gründen kaum möglich. Die Entfernung der herstellbedingten Lösemittelmengen ist aufwendig.

Ein weiterer Nachteil der Sekundärdispersionen ist der zur Ausbildung stabiler Dispersionen erforderliche recht hohe Anteil an Carboxylatgruppen und entsprechend hohe Mengen an Neutralisationsmittel, welches bei der Aushärtung Probleme bereitet, z.B. im Lackfilm verbleibt und dadurch eine störende Hydrophilie verursacht.

Copolymerisatdispersionen, welche durch eine chemische Reaktion, z.B. mit einem Aminoplastharz, einem blockierten Polyisocyanat oder einem Polyisocyanat ausgehärtet werden sollen, müssen eine bestimmte Menge an reaktiven Gruppen, z.B. Hydroxylgruppen, enthalten.

Diese Gruppen werden in der Regel durch die Mitverwendung hydroxyfunktioneller (Meth)acrylsäureester bei der Copolymerisation in das Copolymer eingebracht. Diese Rohstoffe sind allerdings im Vergleich zu den nichtfunktionellen (Meth)acrylsäureestem oder auch zu Styrol sehr teuer, es müssen zudem häufig auch größere Mengen dieser Rohstoffe im Vergleich zu organisch gelösten Copolymerisaten eingesetzt werden, um durch eine größere Vernetzungsdichte die Hydrophilie der Lackfilme zu kompensieren.

Sekundärdispersionen haben einen niedrigen Festkörpergehalt, unter anderem bedingt durch die hohe Konzentration an Salzgruppen im Polymer. Dies führt zu erhöhten Herstell- und Transportkosten und verhindert die Herstellung festkörperreicher Lacke.

Einfach herstellbare Copolymerisatdispersionen, die nur geringe Mengen an flüchtigen organischen Substanzen enthalten, in Kombination mit Vernetzerharzen die Herstellung qualitativ hochwertiger Beschichtungen mit guter Lösemittelbeständigkeit und guter Filmoptik ermöglichen und mit möglichst geringen Mengen an organischen Hilfslösemitteln und Neutralisationsamin lagerstabile, festkörperreiche Dispersionen und Lacke ergeben, vermeiden diese Nachteile.

Überraschenderweise wurde nun gefunden, dass die erfindungsgemäßen, wässrigen, vernetzbaren Bindemitteldispersionen mit niedrigem Lösemittelgehalt auf Basis von hydroxyfunktionellen Polyethern und hydroxyfunktionellen Acrylatcopolymerisaten die gestellten Forderungen erfüllen können.

Gegenstand der Erfindung sind wässrige, vernetzbare Bindemitteldispersionen A) mit niedrigem Lösemittelgehalt, die, bezogen auf Feststoff, enthalten:
A1) 2 bis 30 Gew.-% mindestens eines hydroxyfunktionellen Polyethers mit einer Funktionalität von 1,8 bis 6,0, , einem Molekulargewicht Mₙ von 152 bis 4.000 und einer OH-Zahl von 50 bis 700 mg KOH/g Feststoff,
A2) 35 bis 90 Gew.-% eines hydroxyfuntionellen Copolymerisats mit einer OH-Zahl von 20 bis 220 mg KOH/g Feststoff und einer Säurezahl von 0 bis 50 mg KOH/g Feststoff aus
   b1) (Meth)acrylsäureestern und/oder Vinylaromaten,
   b2) hydroxyfunktionellen Monomeren,
   b3) ggf. sonstigen Monomeren,
b4) gegebenenfalls säurefunktionellen Monomeren
   und
A3) 5 bis 60 Gew.-% eines hydroxy- und carboxyfuntionellen Copolymerisats mit einer OH-Zahl von 30 bis 220 mg KOH/g Feststoff und einer Säurezahl von 25 bis 200 mg KOH/g Feststoff aus
   b1) (Meth)acrylsäureestern und/oder Vinylaromaten,
   b2) hydroxyfunktionellen Monomeren,
   b3) ggf. sonstigen Monomeren,
   b4) säurefunktionellen Monomeren,
wobei die Summe aus A1), A2) und A3) bzw. die Summe aus b1), b2), b3) und b4) jeweils 100 % beträgt, wobei das Verhältnis der Säurezahlen A3):A2) größer 1:1 ist, wobei die Säurezahl der Dispersion A) 8 bis 45 mg KOH/g Feststoff, die OH-Zahl 25 bis 200 mg KOH/g Feststoff und der Festkörpergehalt mehr als 35 Gew.-% beträgt.

Gegenstand der Erfindung sind auch wässrige Bindemittelkombinationen aus 55 - 97Gew.-% wässriger Bindemitteldispersionen A) und 3 - 45 Gew.-% mindestens eines Vernetzerharzes aus der Gruppe der Aminoplastharze und/oder der blockierten Polyisocyanate und/oder der Polyisocyanate.

Gegenstand der Erfindung ist auch ein Verfahren zur Herstellung der erfindungsgemäßen Dispersionen A), dadurch gekennzeichnet, dass in Gegenwart von 2 bis 30 Gew.-% eines hydroxyfunktionellen Polyethers A1) der Funktionalität 1,8 bis 6,0 der Viskosität bei 23°C von ≤ 4.000 mPa.s, einem Molekulargewicht Mₙ von 152 bis 4.000 und einer OH-Zahl von 50 bis 700 mg KOH/g Feststoff zunächst eine radikalisch initiierte Copolymerisation von
b1) (Meth)acrylsäuresten und/oder Vinylaromaten,
b2) hydroxyfunktionellen Monomeren,
b3) ggf. sonstigen Monomeren,
b4) gegebenfalls säurefunktionellen Monomeren,
in einer Menge von 35 bis 90 Gew.-% zu einem hydroxyfunktionellen Copolymerisat A2) mit einer OH-Zahl von 20 bis 220 mg KOH/g Feststoff und einer Säurezahl von 0 bis 50 mg KOH/g Feststoff und im Anschluss daran eine weitere radikalisch initiierte Copolymerisation von
b1) (Meth)acrylsäureestem und/oder Vinylaromaten,
b2) hydroxyfunktionellen Monomeren,
b3) ggf. sonstigen Monomeren,
b4) säurefunktionellen Monomeren,
in einer Menge von 5 bis 60 Gew.-% zu einem hydroxy- und carboxyfunktionellen Copolymerisat A3) mit einer OH-Zahl von 30 bis 220 mg KOH/g Feststoff und einer Säurezahl von 25 bis 200 mg KOH/g Feststoff durchgeführt wird und im Anschluss daran durch Zugabe eines Neutralisationsmittels 40 bis 100 % der Carboxylgruppen in Carboxylatgruppen überführt werden und das so erhaltene Bindemittel in Wasser dispergiert wird, wobei wässrige Dispersionen A) mit einem Festkörpergehalt von größer als 35 Gew.-% und einem Gehalt an organischen Lösemitteln von weniger als 6 % resultieren und wobei die Summe aus A1), A2) und A3 100 % ergibt.

Gegenstand der Erfindung ist auch die Verwendung dieser Bindemittel für chemisch vernetzbare Lacke und Beschichtungen, insbesondere in durch chemische Reaktion vernetzende, pigmentierte Einbrennlacke mit Lösemittelgehalten von weniger als 5 Gew.-% und Festkörpergehalten von mehr als 55 Gew.-%.

Geeignete Polyether A1) weisen eine Funktionalität von 1,8 bis 6,0 vorzugsweise von 2,0 bis 4,0 und besonders bevorzugt von 2,0 bis 3,0 auf. Die Viskosität (bestimmt nach DIN 53019 bei 23°C) liegt vorzugsweise ≤ 4.000, besonders bevorzugt ≤ 2.000 mPa.s, das Molekulargewicht Mn (aus Hydroxylfunktionalität und Hydroxylgruppengehalt errechenbar) liegt bei 152 bis 4.000, vorzugweise bei 200 bis 3.500 und besonders bevorzugt bei 200 bis 3.100. Die OH-Zahl liegt bei 50 bis 700, vorzugsweise bei 100 bis 600 und ganz besonders bevorzugt bei 150 bis 560 mg KOH/g Feststoff.

Geeignete Polyether sind z.B. Alkoxylierungsprodukte hydroxyfunktioneller Startermoleküle, wie Ethylenglykol, Propylenglykol, Trimethylolpropan, Glycerin, Sorbit, Pentaerythrit, Butandiol, Hexandiol oder Gemische dieser und auch anderer hydroxyfunktioneller Verbindungen.
Als Alkoxylierungsmittel sind Ethylenoxid und/oder Propylenoxid besonders geeignet.
Bevorzugte Startermoleküle sind Propylenglykol, Glycerin und Trimethylolpropan. Es können auch Mischungen verschiedener Polyether A1) eingesetzt werden. Es sind sowohl hydrophile als auch hydrophobe Polyether geeignet, wobei die Gesamthydrophilie des Systems die zur Herstellung einer stabilen Dispersion erforderlichen Menge nicht überschreiten sollte.
Die Polyether A1) werden in Mengen von 2 bis 30 Gew.-%, vorzugsweise von 6,5 bis 25 Gew.-% und besonders bevorzugt von 8 bis 14 Gew.%, bezogen auf Feststoff in der Dispersion A1), eingesetzt.
Die Copolymerisate A2) werden in Gegenwart von A1) durch radikalisch initiierte Copolymerisation der Monomeren b1) bis b3), gegebenenfalls unter Mitverwendung von Monomeren b4) hergestellt. Die Menge an A2) bezogen auf Feststoff in der Dispersion A) beträgt 35 bis 90, vorzugsweise 45 bis 85 und besonders bevorzugt 55 bis 80 Gew.-%.
Geeignete Monomere b1) sind (Meth)acrylsäureester und/oder Vinylaromaten, wie z.B. Methylmethacrylat, Butylmethacylat, Ethylacrylat, Buthylacrylat, 2-Ethylhexylacrylat, Styrol, α-Methylstyrol.
Die Monomeren b1) sind in A2) in Mengen von 60 bis 95, vorzugsweise von 70 bis 93 und besonders bevorzugt von 78 bis 92 Gew.-% enthalten. Bevorzugte Monomere b1) sind Methylmethacrylat, Butylacrylat und Styrol.
Geeignete Monomere b2) sind hydroxyfuntionelle Monomere, wie z.B. Hydroxyethylacrylat, Hydroxyethylmethacrylat, Hydroxypropylacrylat, Hydroxypropylmethacrylat, Hydroxybutylacrylat.

Die Monomeren b2) sind in A2) in Mengen von 5 bis 45, vorzugsweise von 7 bis 25 und besonders bevorzugt von 8 bis 20 Gew.-% enthalten. Bevorzugte Monomere b2) sind Hydroxyethylmethacrylat, Hydroxypropylmethacrylat und Hydroxypropylacrylat.
Geeignete Monomere b3) sind z.B. Acrylnitril, Methacrylnitril, N-Methylolmethacrylsäureamid, N-Methoxymethyl(meth)acrylsäureamid, N-Vinylpyrrolidon, Vinyltriethoxysilan, Divinylbenzol, Hexandiolbisacrylsäureester.
Die Monomeren b3) können in A2) in Mengen von 0 bis 20 Gew.-% enthalten sein. Bevorzugt wird auf Monomeren b3) verzichtet.
Geeignete Monomeren b4) sind z.B. Methacrylsäure, Acrylsäure oder Maleinsäure.
Die Monomeren b4) sind in A2) in Mengen von 0 bis 6, vorzugsweise von 0 bis 2 Gew.-% und besonders bevorzugt überhaupt nicht enthalten.
Die Herstellung der Copolymerisate A2) erfolgt durch eine radikalisch initiierte Copolymerisation der Monomerenmischungen in Gegenwart des Polyethers A1) und geeigneter organischer Lösemittel. Der Anteil organischer Lösemittel wird dabei insgesamt so bemessen, dass ein unter Verwendung des Copolymerisats A) hergestellter Lack maximal 5% organische Lösemittel enthält, bzw. das Copolymerisat A) in höchstens 86, vorzugsweise hochstens 88 %-iger organischer Lösung hergestellt wird, und in der wässriger Dispersion A) maximal 6, vorzugsweise weniger als 5% organische Lösemittel enthalten sind.

Als Lösungsmittel für die Copolymerisation können Alkohole, wie z.B. n-Butanol, n-Pentanol, n-Hexanol, Cyclohexanol, Heptanol Methylglykol, Ethylglykol, Butylglykol, Methoxypropanol, Ethoxypropanol, Butoxypropanol, Methyldiglykol, Ethyldiglykol, Butyldiglykol, Glykolsäuremethylester, Glykolsäureethylester, Glykolsäurebutylester, Milchsäuremethylester, Milchsäureethylester, Milchsäurebutylester und Mischungen dieser und anderer Alkohole sowie Ether, wie z.B. Dimethyldiglykol, Dimethylpropylenglykol, andere Lösungsmittel, wie z.B. N-Methylpyrrolidon, Solvent-Naphtha, Ethylcarbonat, Butylacetat, Xylol, Toluol, Cyclohexan, Diacetonalkohol, Methylisobutylketon, Aceton, sowie Mischungen der genannten Lösungsmittel verwendet werden.

Als Initiatoren geeignet sind organische Peroxide, wie Dibenzoylperoxid, Di-tert.-butylperoxid, tert.-Butylperoxy-2-ethylhexanoat, Didecanoylperoxid und Azoverbindungen wie Azodiisobuttersäurenitril in Mengen von 0,3 bis 10, vorzugsweise von 0,6 bis 3,0 Gew.-% bezogen auf Gesamtfeststoffgehalt. Zur Erzielung des gewünschten Molekulargewichtes können Regler wie n-Dodecylmercaptan oder Mercaptoethanol in Mengen von 0,01 bis 1 % mitverwendet werden. Die Copolymerisation wird im allgemeinen bei einer Temperatur von 100 bis 180°C nach einem Monomerzudosierverfahren durchgeführt.

Die Copolymerisate A3) werden in Gegenwart von Polyethern A1), Copolymerisat A2) und den oben genannten Lösemittel durch radikalisch initiierte Copolymerisation der Monomeren b1) bis b4) hergestellt.
Die Menge an A3) bezogen auf Feststoff in der Dispersion A) beträgt 5 bis 60, vorzugsweise 7,5 bis 45 und besonders bevorzugt 10 bis 32 Gew.-%.
Die geeigneten Monomeren b1) bis b4) entsprechen den vorstehend beschriebenen.
Monomeren b1) werden in Mengen von 45 bis 90, vorzugsweise von 50 bis 85, besonders bevorzugt von 55 bis 80 Gew.-%, Monomere b2) werden in Mengen von 5 bis 50, vorzugsweise von 10 bis 45, besonders bevorzugt von 15 bis 35 Gew.-%, Monomere b3) werden in Mengen von 0 bis 20 Gew.-%, bevorzugt überhaupt nicht und Monomere b4) werden in Mengen von 2,5 bis 30, vorzugsweise von 4 bis 25, besonders bevorzugt von 5 bis 20 Gew.-% eingesetzt.
Geeignete Initiatoren und gegebenenfalls einzusetzende Molekulargewichtsregler sind obenstehend beschrieben. Die Copolymerisation von A3) wird im allgemeinen bei Temperaturen von 100 bis 180°C nach einem Monomerzudosierverfahren durchgeführt.
Im Anschluss an die Herstellung von A3) werden die in A3) und gegebenenfalls in A2) enthaltenen Carboxylgruppen durch Zugabe eines Neutralisationsmittels in Carboxylatgruppen überführt und das so erhaltene Bindemittel in Wasser dispergiert. Dabei kann sowohl das Wasser zum Bindemittel als auch das Bindemittel zum Wasser gegeben werden. Es ist auch möglich, Wasser und Neutralisationsmittel gleichzeitig dem Bindemittel einzuverleiben bzw. das Bindemittel in einem Wasser/Neutralisationsmittelgemisch zu dispergieren. Dieses Dispergieren wird üblicherweise für 1 bis 2 Stunden bei 40 bis 90°C durchgeführt.
Die Menge der hydroxyfunktionellen Monomeren b2) wird so gewählt, dass das Copolymerisat A2) eine OH-Zahl von 20 bis 220, vorzugsweise von 30 bis 120 und besonders bevorzugt von 35 bis 90mg KOH/g Feststoff, Copolymerisat A3) eine OH-Zahl von 30 bis 220, vorzugsweise von 40 bis 160 und besonders bevorzugt von 60 bis 140 mg KOH/g Feststoff aufweist, wobei die Dispersion A) letztendlich eine OH-Zahl von 25 bis 200, vorzugsweise von 45 bis 160 und besonders bevorzugt von 65 bis 120 mg KOH/g Feststoff besitzt.

Die Mengen der carboxylfunktionellen Monomeren b4) werden so gewählt, dass in A2) eine Säurezahl von 0 bis 50, vorzugsweise von 0 bis 25 und besonders bevorzugt von 0 bis 2 mg KOH/g Feststoff, in A3) eine Säurezahl von 25 bis 200, vorzugsweise von 40 bis 160 und besonders bevorzugt von 40 bis 120 mg KOH/g Feststoff enthalten ist, wobei das Verhältnis der Säurezahlen von A3):A2) größer 1:1, vorzugsweise größer 2:1, besonders bevorzugt größer 4:1 ist.

In einer weiteren, besonders bevorzugten Ausführungsform enthält Copolymerisat A2) keine carboxylfunktionellen Monomeren b4) und weist daher eine Säurezahl von nahezu 0 mg KOH/g Feststoff auf (durch geringe Verunreinigung bzw. durch Hydrolyse-reaktionen der eingesetzten (Meth)acrylsäureestermonomeren kann auch in diesem Fall eine sehr geringe Säurezahl in A2), von maximal 2 mg KOH/g Feststoff enthalten sein).

Die Säurezahl der Dispersion A) liegt bei 8 bis 45, vorzugsweise bei 10 bis 33, besonders bevorzugt bei 12 bis 22 mg KOH/g Feststoff.

Zur Neutralisation können organische Amine und wasserlösliche, anorganische Basen, z.B. Natrium- und Kaliumhydroxid oder Ammoniak verwendet werden. Bevorzugt sind organische Amine wie N-Methylmorpholin, Diethanolamin, Triethanolamin, Dimethylisopropanolamin, Methyldiethanolamin, Diethylethanolamin, Dimethylethanolamin, Butanolamin, Dibutanolamin, Morpholin, Ammoniak sowie Mischungen dieser Neutralisationsmittel, gegebenenfalls mit anderen, auch höhermolekularen Ether- oder Estergruppen aufweisenden Aminen. In der wässrigen Copolymerisatdispersion und nach Neutralisation hat man wenigstens 40 % der neutralisationsfähigen Carboxylgruppe durch Salzbildung neutralisiert, bevorzugt 70 bis 100 %.

Der pH-Wert der wässrigen Dispersion A) beträgt vorzugsweise 6,0 bis 9,5. Die so hergestellten wässrigen Copolymerisate weisen je nach Neutralisationsgrad und Molekulargewicht Festgehalte von größer 35, vorzugsweise 38 % auf.

Die Dispersionen A) sind je nach zugesetzter Menge Neutralisationsmittel, Art und Menge organischer Lösungsmittel sowie Art und Menge Polyether A1) teilweise gelöst und teilweise dispergiert. Die gelösten Anteile nehmen mit steigendem Neutralisationsgrad, mit erhöhten Colöseranteilen und mit höheren Mengen hydrophiler Polyether A1) zu. Dabei kann die Dispersion über eine kolloidale Lösung zu einer klaren Harzlösung übergehen.

Die Herstellung der erfindungsgemäßen Dispersionen A) mit niedrigem Lösemittelgehalt ist dadurch gekennzeichnet, dass in Gegenwart von 2 bis 30, vorzugsweise von 6,5 bis 25, besonders bevorzugt von 8 bis 14 Gew.-% eines hydroxyfunktionellen Polyethers A1), mit einer Funktionalität von 1,8 bis 6,0, vorzugsweise von 2,0 bis 4,0, besonders bevorzugt von 2,0 bis 3,0 und einer Viskosität bei 23°C von ≤ 4.000, vorzugsweise ≤ 2.000 mPa.s, einem Molekulargewicht von 152 bis 4.000, vorzugsweise von 200 bis 3.500, besonders bevorzugt von 200 bis 3.100 und einer OH-Zahl von 50 bis 700, vorzugsweise von 100 bis 600, besonders bevorzugt von 150 bis 560 mg KOH/g Substanz und gegebenenfalls in Gegenwart geeigneter Lösemittel zunächst eine radikalisch initiierte Copolymerisation von
b1) (Meth)acrylsäureestern und/oder Vinylaromaten, vorzugsweise in einer Menge von 60 bis 95, besonders bevorzugt in einer Menge von 70 bis 93 Gew-%,
b2) hydroxyfunktionellen Monomeren, vorzugsweise in einer Menge von 5 bis 45, besonders bevorzugt in einer Menge von 7 bis 25 Gew.-%,
b3) ggf. sonstigen Monomeren, vorzugsweise in einer Menge von 0 bis 20, besonders bevorzugt in einer Menge von 0 bis 10 Gew.-% und
b4) säurefunktionellen Monomeren, vorzugsweise in einer Menge von 0 bis 6, besonders bevorzugt in einer Menge von 0 bis 2 Gew.-%,
durchgeführt wird und das resultierende Copolymerisat A2) eine OH-Zahl von 20 bis 220, vorzugsweise von 30 bis 120 und besonders bevorzugt von 35 bis 90 mg KOH/g Feststoff aufweist und 35 bis 90, vorzugsweise 45 bis 85, besonders bevorzugt 55 bis 80 Gew.-% der Gesamtfeststoffmenge in A) ergibt,
und im Anschluss daran eine weitere radikalisch initiierte Copolymerisation in Gegenwart von A1) und A2),
von oben beschriebenen Monomeren b1), vorzugsweise in einer Menge von 45 bis 90, besonders bevorzugt in einer Menge von 50 bis 85 Gew.-%.
Monomeren b2), vorzugsweise in einer Menge von 5 bis 50, besonders bevorzugt in einer Menge von 10 bis 45 Gew.-%,
Monomeren b3), vorzugsweise in einer Menge von 0 bis 20, besonders bevorzugt in einer Menge von 0 bis 10 Gew.-%,
Monomeren b4), vorzugsweise in einer Menge von 2,5 bis 30, besonders bevorzugt in einer Menge von 4 bis 25 Gew.-%,
derart durchgeführt wird, dass das resultierende Copolymerisat A3) eine OH-Zahl von 30 bis 220, vorzugsweise von 40 bis 160, besonders bevorzugt von 60 bis 140 mg KOH/g Feststoff aufweist und 5 bis 60, vorzugsweise 7,5 bis 45, besonders bevorzugt 10 bis 32 Gew.-% der Gesamtfeststoffmenge in A) ergibt,
wobei die Säurezahl von A2) 0 bis 50, vorzugsweise 0 bis 25 und besonders bevorzugt 0 bis 2 mg KOH/g Feststoff, die Säurezahl von A3) 25 bis 200, vorzugsweise 40 bis 160 und besonders bevorzugt 40 bis 120 mg KOH/g Feststoff beträgt, und wobei die Säurezahl in A3) größer als in A2) ist, und wobei die Dispersion A) eine Säurezahl von 8 bis 45, vorzugsweise von 10 bis 33, besonders bevorzugt von 12 bis 22 mg KOH/g Feststoff aufweist, und wobei im Anschluss an die Polymerisation von A3) durch Zugabe eines Neutralisationsmittels 40 bis 100 % der Carboxylgruppen in Carboxylatgruppen überführt werden und das so erhaltene Bindemittel in Wasser zu einer Dispersion A) mit einem Festkörpergehalt größer 35 Gew.-% und einem Gehalt an organischen Lösemittel von kleiner 6 Gew.-% dispergiert wird. Die Summe der Feststoffgehalte von A1), A2) und A3) beträgt dabei 100 %.

Die erfindungsgemäßen Bindemitteldispersionen A) werden üblicherweise in Kombination mit Vernetzerharzen und gegebenenfalls Pigmenten und sonstigen in der Lackindustrie bekannten Hilfs- und Zusatzstoffe in oder als Lack bzw. Beschichtungsmittel eingesetzt. Die gebrauchsfertigen Lacke weisen im allgemeinen 55 bis 97, vorzugsweise 65 bis 90 Gew.-% bezogen auf die Summe Feststoff von Bindemittel und Vernetzer an Dispersion A) und 3 bis 45, vorzugsweise 10 bis 35 Gew.-% bezogen auf die Summe Feststoff von Bindemittel und Vernetzer an Vernetzerharz auf.
Als Vernetzerharze eignen sich beispielsweise Amid- und Amin-Formaldehydharze, Phenolharze, Aldehyd- und Ketonharze, wie z.B. Phenol-Formaldehydharze, Resole, Furanharze, Harnstoffharze, Carbamidsäureesterharze, Triazinharze, Melaminharze, Benzoguanaminharze, Cyanamidharze, Anilinharze, wie sie in "Lackkunstharze", H. Wagner, H.F. Sarx, Carl Hanser Verlag München, 1971, beschrieben sind.
Gut geeignet als Vernetzerharze sind auch blockierte Polyisocyanate, beispielsweise auf Basis von Isophorondiisocyanat, Hexamethylendiisocyanat, 1,4-Diisocyanatocyclohexan, Bis-(4-isocyanatocyclohexyl)-methan, 1,3-Diisocyanatobenzol, 1,4-Diisocyanatobenzol, 2,4-Diisocyanato-1-methylbenzol, 1,3-Diisocyanato-2-methylbenzol, 1,3-Bisisocyanatomethylbenzol, 2,4-Bisisocyanatomethyl-1,5-dimethylbenzol, Bis-(4-isocyanatophenyl)-propan, Tris-(4-isocyanatophenyl)-methan, Trimethyl-1,6-diisocyanatohexan oder auf Basis von Lackpolyisocyanaten wie Biuretgruppen aufweisenden Polyisocyanaten auf Basis von 1,6-Diisocyanatohexan, oder Urethangruppen aufweisenden Lackpolyisocyanaten auf Basis von 2,4- und/oder 2,6-Diisocyanatotoluol oder Isophorondiisocyanat einerseits und niedermolekularen Polyhydroxylverbindungen wie Trimethylolpropan, den isomeren Propandiolen oder Butandiolen oder beliebigen Gemischen derartigen Polyhydroxylverbindungen andererseits.
Geeignete Blockierungsmittel für diese Polyisocyanate sind beispielsweise einwertige Alkohole wie Methanol, Ethanol, Butanol, Hexanol, Cyclohexanol, Benzylalkohol, Oxime wie Acetoxim, Methylethylketoxim, Lactame wie α-Caprolactam oder Phenole.
Die hydrophile Modifizierung der Copolymerisatkomponente A) reicht im allgemeinen aus, um auch die Dispergierbarkeit der Vernetzerharze, soweit es sich nicht ohnehin um wasserlösliche oder -dispergierbare Substanzen handelt, zu gewährleisten.
Wasserlösliche bzw. dispergierbare, blockierte Polyisocynate sind z.B. durch Modifikation mit Carboxylat- und/oder Polyethylenoxidgruppen erhältlich.
Ebenfalls geeignete Vernetzerharze sind niedrigviskose, hydrophobe oder hydrophile Polyisocyanate mit freien Isocyanatgruppen auf Basis aliphatischer, cycloaliphatischer, araliphatischer und/oder aromatischer Isocyanate. Diese Polyisocyanate weisen bei 23°C im allgemeinen eine Viskosität von 50 bis 5.000 mPa.s auf. Falls erforderlich, können die Polyisocyanate in Abmischung mit geringen Mengen an inerten Lösemitteln zum Einsatz gelangen, um die Viskosität auf einen Wert innerhalb des genannten Bereiches abzusenken.

Eine Hydrophilierung der Polyisocyanate ist z.B. durch Umsetzung mit unterschüssingen Mengen an einwertigen, hydrophilen Polyetheralkoholen möglich. Die Herstellung derartiger hydrophilierter Polyisocyanate ist beispielsweise in der EP-A 540 985 beschrieben.
Es können auch Mischungen verschiedener Vernetzerharze eingesetzt werden.
Vor, während oder nach der Herstellung der wässrigen Bindemittelkombinationen durch Abmischung der Einzelkomponenten und auch im Fall der Herstellung von einkomponentig zu verarbeitenden Beschichtungsmitteln können die üblichen Hilfs- und Zusatzmittel der Lacktechnologie zugesetzt werden, wie z.B. Entschäumungsmittel, Verdickungsmittel, Verlaufshilfsmittel, Pigmente, Dispergierhilfsmittel, Katalysatoren, Hautverhinderungsmittel, Antiabsetzmittel, Sikkative, Emulgatoren.

Die so erhaltenen erfindungsgemäßen Beschichtungsmittel eignen sich für alle Einsatzgebiete, in denen lösemittelhaltige, lösemittelfreie oder andersartige wässrige Anstrich- und Beschichtungssysteme mit einem erhöhten Eigenschaftsprofil Verwendung finden, z.B. Beschichtung mineralischer Baustoff-Oberflächen, Lackierung und Versiegelung von Holz und Holzwerkstoffen. Beschichtung metallischer Oberflächen; Beschichtung und Lackierung asphalt- oder bitumenhaltiger Straßenbeläge, Lackierung und Versiegelung diverser Kunststoffoberflächen. Bei den unter erfindungsgemäßer Verwendung der erfindungsgemäßen Bindemittelkombinationen hergestellten Lacken bzw. Beschichtungsmitteln handelt es sich um solche der unterschiedlichen Art, wie beispielsweise Grundierungen, Füller, pigmentierte oder transparenter Decklacke, die in der Einzel- und Serienapplikation, z.B. im Bereich der Industrielackierung, Automobil-Erst- und -Reparaturlackierung, Anwendung finden können.
Bevorzugte Verwendungen der erfindungsgemäßen Dispersionen A) ist in Kombination mit Aminovernetzerharzen bzw. blockierten Polyisocyanaten die Lackierung metallischer Oberflächen mit pigmentierten Lacken, welche einen Festkörpergehalt von mehr als 55 Gew.-%, vorzugsweise mehr als 60 Gew.-% und weniger als 5 Gew.-% organische Lösemittel enthalten.

Die Herstellung der Beschichtung kann nach den unterschiedlichen Spritzverfahren wie beispielsweise Luftdruck-, Airless- oder Elektrostatik-Spritzverfahren unter Verwendung von Ein- oder gegebenenfalls Zweikomponenten-Spritzanlagen erfolgen. Die erfindungsgemäß herzustellenden und zu verwendenden Lacke und Beschichtungsmassen können jedoch auch nach anderen Methoden, beispielsweise durch Strich, Rollen oder Rakeln appliziert werden.

### Beispiele

Prozentangaben, falls nicht anders angegeben, beziehen sich auf Gewichtsprozente.

In allen Beispielen wurde unter Inertgas (Stickstoff) gearbeitet.

Alle Angaben bezüglich der OH- und Säurezahlen beziehen sich auf mg KOH/g Feststoff.

Die Viskositäten wurden bei 23°C in einem Contraves Rotationsviskosimeter nach DIN 53019-T01-80 bestimmt. Das repräsentative Geschwindigkeitsgefälle D betrug 9,245⁻¹.

### Beispiel 1

In ein 4-1-Reaktionsgefäß mit Rühr-, Kühl- und Heizvorrichtung werden 116 g Butylglykol und 150 g eines Polyethers A1) (propoxyliertes Glycerin, OH-Zahl: 245 mg KOH/g Feststoff, Viskosität bei 23°C:250 mPa.s, MolekulargewichtMₙ: 690, Funktionalität: 3) eingewogen und auf 155°C erhitzt. Dann werden eine Mischung aus 321 g Butylacrylat, 366 Styrol und 198 g Hydroxyethylmethacrylat in 2 Stunden und parallel dazu 17,1 g Di-tert.-Butylperoxid gelöst in 28,6 g Butylglykol zudosiert (Copolymerisat A2). Direkt im Anschluss daran, werden eine Mischung aus 180 g Butylacrylat, 139 g Styrol, 83 g Hydroxyethylmethacrylat und 34 g Acrylsäure in 1 Stunde und parallel dazu 12,9 g Di-tert.-Butylperoxid gelöst in 21,4 g Butylglykol in 1,5 Stunden zudosiert (Copolymerisat A3)). Nach weiteren 2 Stunden Rühren bei 150 bis 155°C wird auf 100°C abgekühlt, 50 g Dimethylethanolamin zugegeben und mit 1.980 dest. Wasser dispergiert. Man erhält eine wässrige Bindemitteldispersion A) mit einem Festkörpergehalt von 40%, einem Gehalt an organischen Lösemitteln von 4,4%, einer Säurezahl von 19 mg KOH/g Feststoff und einer OH-Zahl von 105 mg KOH/g Feststoff.

### Beispiel 2

In ein 6-1-Reaktionsgefäß mit Rühr-, Kühl- und Heizvorrichtung werden 228 g Butylglykol und 250 g eines Polyethers A1) (ethoxyliertes Trimethylolpropan, OH-Zahl: 550 mg KOH/g Substanz, Viskosität bei 23°C:500 mPa.s, Molekulargewicht Mₙ : 306, Funktionalität: 3) eingewogen und auf 155°C erhitzt. Dann werden eine Mischung aus 625 g Butylacrylat, 700 g Styrol und 150 g Hydroxyethylmethacrylat in 2,5 Stunden und parallel dazu 27,8 g Butylglykol zudosiert (Copolymerisat A2)). Direkt im Anschluss daran, werden eine Mischung aus 300 g Butylacrylat, 231 g Styrol, 138 g Hydroxyethylmethacrylat und 56 g Acrylsäure in 1,5 Stunden und parallel dazu 22,2 Di-tert.-Butylperoxid gelöst in 22,2 g Butylglykol in 2 Stunden zudosiert (Copolymerisat A3)). Nach weiteren 2 Stunden Rühren bei 150 bis 155°C wird auf 100°C abgekühlt, 83 g Dimethylethanolamin zugegeben und mit 3.080 g dest. Wasser dispergiert. Man erhält eine wässrige Bindemitteldispersion A) mit einem Festkörpergehalt von 41,5 %, einem Gehalt an organischen Lösemitteln von 4,6 %, einer Säurezahl von 18 mg KOH/g Feststoff und einer OH-Zahl von 105 mg KOH/g Feststoff.

### Beispiel 3

In ein 4-1-Reaktionsgefäß mit Rühr-, Kühl- und Heizvorrichtung werden 70 g Butylglykol, 70 g Ethyldiglykol und 150 g des in Beispiel 2 beschriebenen Polyethers A1) eingewogen und auf 155°C erhitzt. Dann werden eine Mischung aus 360 g Butylacrylat, 420 g Methylmethacrylat und 75 g Hydroxyethylacrylat in 2 Stunden und parallel dazu 25,7 g Di-tert.-Butylperoxid gelöst in 8 g Butylglykol und 8 g Ethyldiglykol zudosiert (Copolymerisat A2)). Direkt im Anschluss daran, werden eine Mischung aus 139 g Butylacrylat, 195 g Methylmethacrylat, 82 g Hydroxyethylacrylat und 34 g Acrylsäure in 1 Stunde und parallel dazu 19,3 g Di-tert.-Butylperoxid gelöst in 5,5 g Butylglykol und 5,5 Ethyldiglykol in 1,5 Stunden zudosiert (Copolymerisat A3)). Nach weiteren 2 Stunden Rühren bei 150 bis 155°C, wird auf 100°C abgekühlt, 52,5 g Dimethylethanolamin zugegeben und in 1.670 g dest. Wasser dispergiert. Man erhält eine wässrige Bindemitteldispersion A) mit einem Festkörpergehalt von 44%, einem Gehalt an organischen Lösemitteln von 4,8 %, einer Säurezahl von 21 mg KOH/g Feststoff und einer OH-Zahl von 106 mg KOH/g Feststoff.

### Beispiel 4

In ein 6-1-Reaktionsgefäß mit Rühr-, Kühl- und Heizvorrichtung werden 120 g Butylglykol und 120 g Ethyldiglykol, 180 g des in Beispiel 2 beschriebenen Polyethers A1) und 100 g eines weiteren Polyethers A1) (propoxyliertes Trimethylolpropan, OH-Zahl 56 mg KOH/g Substanz, Viskosität bei 23°C:500 mPa.s, Molekulargewicht Mₙ : 3.005, Funktionalität: 3) eingewogen und auf 155°C erhitzt. Dann werden eine Mischung aus 600 g Butylacrylat, 125 g Hydroxyethylacrylat und 700 g Methylmethacrylat in 2 Stunden und parallel dazu 42,8 g Di-tert.-Butylperoxid gelöst in 11 g Butylglykol und 11 g Ethyldiglykol zudosiert (Copolymerisat A2)). Direkt im Anschluss daran, werden eine Mischung aus 256 g Butylacrylat, 275 g Methylmethacrylat, 162 g Hydroxyethylacrylat und 56 g Acrylsäure in 1 Stunde und parallel dazu 32,2 g Di-tert.-Butylperoxid gelöst in 7 g Butylglykol und 7 g Ethyldiglykol in 1 1/2 Stunden zudosiert (Copolymerisat A3)). Nach weiteren 2 Stunden Rühren bei 150 bis 155°C wird auf 100°C abgekühlt und 84 g Dimethylethanolamin und 2.700 g dest. Wasser zugegeben. Man erhält eine wässrige Bindemitteldispersion A) mit einem Festkörpergehalt von 44,5%, einem Gehalt an organischen Lösemittel von 4,9%, einer Säurezahl von 22 mg KOH/g Feststoff und einer OH-Zahl von 97 mg KOH/g Feststoff.

### Beispiel 5

In ein-4-1-Reaktionsgefäß mit Rühr-, Kühl- und Heizvorrichtungen werden 116 g Butylglykol und 150 g Polyether A1) (propoxyliertes Propylenglykol, OH-Zahl: 515 mg KOH/g Substanz, Viskosität bei 23°C:55 mPa.s, Molekulargewicht Mₙ: 218, Funktionalität: 2) eingewogen und auf 155°C erhitzt. Dann werden eine Mischung aus 360 g Butylacrylat, 410 g Styrol und 160 g Hydroxyethylmethacrylat in 2 Stunden und parallel dazu 17,2 g Di-tert.-Butylperoxid gelöst in 28 g Butylglykol zudosiert (Copolymerisat A2)). Direkt im Anschluss daran, werden eine Mischung aus 180 g Butylacrylat, 34 g Acrylsäure, 82 g Hydroxyethylmethacrylat und 85 g Styrol in 1 Stunde und parallel dazu 12,8 g Di-tert.-Butylperoxid gelöst in 22 g Butylglykol in 1,5 Stunden zudosiert (Copolymerisat A3)). Nach weiteren 2 Stunden Rühren bei 150 bis 155°C wird auf 100°C abgekühlt, 57 g Dimethylisopropanolamin zugegeben und in 1.700 g dest. Wasser dispergiert. Man erhält eine wässrige Bindemitteldispersion A) mit einem Festkörpergehalt von 41%, einem Gehalt an organischen Lösemitteln von 4,5%, einer Säurezahl von 20 mg KOH/g Feststoff und einer OH-Zahl von 120 mg KOH/g Feststoff.

### Vergleichsbeispiel 6

### (Entspricht im Prinzip Beispiel 3, ohne Polyether A1)

In ein 4-1-Reaktionsgefäß mit Rühr-, Kühl- und Heizvorrichtungen werden 140 g Butylglykol und 140 g Ethylendiglykol eingewogen (doppelte Lösemittelmenge wie in Beispiel 3 = Mindestfüllmenge Reaktionsgefäß) und auf 155°C erhitzt. Dann werden eine Mischung aus 510 g Butylacrylat, 420 g Methylmethacrylat und 75 g Hydroxyethylacrylat in 2 Stunden und parallel dazu 25,7 g Di-tert.-Butylperoxid gelöst in 8 g Butylglykol und 8 g Ethylendiglykol zudosiert (Copolymerisat A2)). Direkt im Anschluss daran, werden eine Mischung aus 139 g Butylacrylat, 195 g Methylmethacrylat, 82 g Hydroxyethylacrylat und 34 g Acrylsäure in 1 Stunde und parallel dazu 19,3 g Di-tert.-Butylperoxid gelöst in 5,5 g Butylglykol und 5,5 g Ethyldiglykol in 1,5 Stunden zudosiert (Copolymerisat A3)). Nach weiteren 2 Stunden Rühren bei 150 bis 155°C wird auf 100°C abgekühlt, 52,5 g Dimethylethanolamin zugegeben und in 1.530 g dest. Wasser dispergiert. Man erhält eine wässrige Bindemitteldispersion mit einem Festkörpergehalt von 44%, einem Gehalt an organische Lösemitteln von 9,6%, einer Säurezahl von 21 mg KOH/g Feststoff und einer OH-Zahl von 53 KOH/g Feststoff.

Die erfindungsgemäßen Bindemittel gemäß den Beispielen 1) bis 5) und dem Vergleichsbeispiel 6) wurden auf Lagerstabilität bei Raumtemperaturlagerung geprüft. Die erfindungsgemäßen Produkte sind mehr als 6 Monate lagerstabil, das Produkt aus dem Vergleichsbeispiel 6) zeigt bereits nach 1 Monat Phasentrennung und ist deshalb für die Praxis nicht gut geeignet.

Die erfindungsgemäßen Bindemittel aus den Beispielen 1), 2), 3), 4) und dem Vergleichsbeispiel 6) wurden 80:20, jeweils fest auf fest, mit einem Aminoplastharz (®Cymel 327, American Cyanamid) gemischt und mit Titandioxid zu Weißlacken für Einbrennlackierungen angerieben. Die Lacke wurden auf Stahlbleche appliziert und 10 Minuten bei 160°C eingebrannt. Die Applikationsviskosität betrug 30 Sek. im DIN 4 Becher bei 23°C. Die Trockenfilmstärke lag bei 30 bis 40 µm. Als weiterer Vergleich 7), wurde ein Weißlack auf Basis eines handelsüblichen, wasserverdünnbaren Polyesterbindemittels (®Bayhydrol D 155, Bayer AG) mitgeprüft. Dabei wurden folgende Ergebnisse erhalten:

| Bindemittel aus Beispiel | 1 | 2 | 3 | 4 | 6 (Vergleich) | 7 (Vergleich) |
|---|---|---|---|---|---|---|
| Lackfestkörpergehalt | 63% | 62% | 62% | 63% | 59% | 45% |
| Gehalt an org. Lösemittel im Lack | 3,4% | 3,5% | 3,4% | 3,5% | 6,4% | 10% |
| Pendelhärte nach DIN 53157 | 142 s | 150 s | 126 s | 138 s | 89 s | 145 s |
| Erichsentiefung nach DIN 53156 | 5,9 | 5,4 | 4,7 | 4,8 | 4,8 | 6,5 |
| MEK-Wischtest ¹⁾ | o.B | o.B | o.B | o.B | o.B | o.B |
| Weißgrad | 87,6 | 88,0 | 87,7 | 87,9 | 87,2 | 86,4 |
| (Elrepho)Anfang " nach 1 Std., 180°C | 85,9 | 85,5 | 84,4 | 85,0 | 81,7 | 79,1 |
| Glanz 20° | 82 | 81 | 78 | 78 | 50 | 79 |
| Kondensatmenge ²⁾ | 1,2% | 1,4% | 1,3% | 1,4% | 1,2% | 4,2% |

| | | | | | | |
|---|---|---|---|---|---|---|
| ¹⁾ Wischtest mit einem Methylethylketon-getränkten Wattebausch. Es wurde die Filmoberfläche nach 100 Doppelhüben beurteilt (o.B. = ohne Befund) | | | | | | |
| ²⁾ Die Kondensatmenge gibt die Menge an flüchtigen Bestandteilen im Lack wieder, die nach einer Vortrocknung der Beschichtung (1 Stunde bei 125°C) bei einer Erwärmung auf 160°C für 15 Minuten freigesetzt wird. Dies ist ein Maß für die Belastung der Einbrennöfen mit flüchtigen Bestandteilen ("Kondensat"), je niedriger der Wert, umso günstiger. | | | | | | |

Die aus den erfindungsgemäßen Bindemitteln hergestellten Einbrennlacke weisen einen sehr hohen Lackfestkörper von über 60% bei Applikationsviskosität auf. Die beiden Vergleiche liegen unter 60%. Die mechanischen Eigenschaften der gehärteten Lackfilme aus Beispiel 1 bis 4 und Vergleich 7 sind vergleichbar gut, Vergleich 6 zeigt deutliche Schwächen in der Filmhärte.

Die Lösemittelbeständigkeit aller Filme ist gut (MEK-Wischtest: 100 Hübe mit einem mit Methylethylketon getränkem Tuch: o.B. = ohne Befund). In der Weißgradhaltung nach Temperaturbelastung (Überbrennfestigkeit) sind die Lackfilme gemäß den erfindungsgemäßen Beispielen deutlich besser als die der Vergleiche. Im Glanz sind die erfindungsgemäßen Produkte vergleichbar gut wie Beispiel 7, Vergleich 6 ist deutlich schlechter.

In der Kondensatbildung sind die erfindungsgemäßen Produkte und Vergleich 6 gut zu bewerten, Vergleich 7 schneidet hier sehr schlecht ab. Die Vergleichsprodukte enthalten deutlich mehr flüchtige organische Lösemittel. Zusammenfassend ist festzustellen, dass die erfindungsgemäßen Beispiele in der Summe aller Eigenschaften mit gut zu beurteilen sind, während die Vergleichsbeispiele in einigen wichtigen Eigenschaften erhebliche Defizite aufweisen. Dabei ist bei den erfindungsgemäßen Produkten die gute Filmmechanik überraschend, da aufgrund der teilweise sehr niedrigen Molekulargewichte und hohen OH-Zahlen der Polyetherreaktivverdünner eher schlechtere Werte (z.B. Versprödung) zu erwarten waren.

Ebenso überraschend sind die gute Weißgradhaltung bei Temperaturbelastung und die niedrige Kondensatmenge, obwohl niedermolekulare Polyether enthalten sind. Trotz der niedrigen Menge an organischem Lösemittel und dem niedrigen Salzgruppengehalt zeigen die erfindungsgemäßen Produkte eine gute Pigmentbenetzung, eine gute Filmoptik und vor allem eine ausgezeichnete Lagerstabilität bei hohen Festkörpergehalten.

Aus der Bindemitteldispersion A), gemäß Beispiel 5) und einem niedrigviskosen Polyisocyanat (Trimerisat von Hexamethylendiisocyanat, Viskosität bei 23°C:900 mPa.s, durchschnittlicher NCO-Gehalt 22,5%) wird durch einfaches Vermischen (Verhältnis NCO:OH = 1,4:1) mit einem Glasstab ein wässriges 2-Komponenten-Polyurethan-System hergestellt und mit einem Filmzieher auf Glasplatten aufgezogen. Nach Aushärtung bei Raumtemperatur erhält man einen völlig klaren, vernetzten Lackfilm mit sehr guten mechanischen Eigenschaften. Setzt man dagegen die Dispersion aus Vergleichsbeispiel 6) ein, so erhält man einen trüben Film, der für Lackanwendungen nicht geeignet ist.

## Patentansprüche

1. Wässrige, vernetzbare Bindemitteldispersion A) mit niedrigem Lösemittelgehalt, **dadurch gekennzeichnet, dass**, bezogen auf Feststoff, enthalten sind
A1) 2 bis 30 Gew.-% mindestens eines hydroxyfunktionellen Polyethers mit einer Funktionalität von 1,8 bis 6,0, einem Molekulargewicht Mₙ von 152 bis 4.000 und einer OH-Zahl von 50 bis 700 mg KOH/g Feststoff,
A2) 35 bis 90 Gew.-% eines hydroxyfunktionellen Copolymerisats mit einer OH-Zahl von 20 bis 220 mg KOH/g Feststoff und einer Säurezahl von 0 bis 50 mg KOH/g Feststoff aus
b1) (Meth)acrylsäureestem und/oder Vinylaromaten,
b2) hydroxyfunktionellen Monomeren,
b3) ggf. sonstigen Monomeren,
b4) gegebenenfalls säurefunktionellen Monomeren und
A3) 5 bis 60 Gew.-% eines hydroxy- und carboxyfunktionellen Copolymerisats mit einer OH-Zahl von 30 bis 220 mg KOH/g Feststoff und einer Säurezahl von 25 bis 200 mg KOH/g Feststoff aus.
b1) (Meth)acrylsäureestem und/oder Vinylaromaten,
b2) hydroxyfunktionellen Monomeren,
b3) ggf. sonstigen Monomeren und
b4) säurefunktionellen Monomeren,
wobei die Summe aus A1), A2) und A3), bzw. die Summe aus b1), b2) b3) und b4) jeweils 100% beträgt, wobei das Verhältnis der Säurezahlen A3) : A2) größer 1 : 1 ist, wobei die Säurezahl der Dispersion A) 8 bis 45 mg KOH/g Feststoff, die OH-Zahl bis 25 bis 200 mg KOH/g Feststoff und der Festkörpergehalt mehr als 35 Gew.% beträgt.

2. Wässrige Bindemitteldispersion A) gemäß Anspruch 1, **dadurch gekennzeichnet, dass**, bezogen auf Feststoff, enthalten sind
A1) 6,5 bis 25 Gew.-% mindestens eines hydroxyfunktionellen Polyethers mit einer Funktionalität von 1,8 bis 6,0, einer Viskosität bei 23°C von ≤ 4.000 mPa.s, einem Molekulargewicht Mₙ von 152 bis 4.000 und einer OH-Zahl von 50 bis 700 mg KOH/g Feststoff,
A2) 35 bis 90 Gew.-% eines hydroxyfunktionellen Copolymerisats mit einer OH-Zahl von 20 bis 220 mg KOH/g Feststoff und einer Säurezahl von 0 bis 50 mg KOH/g Feststoff aus
b1) 60 bis 95 Gew.-% (Meth)acrylsäureestem und/oder Vinylaromaten,
b2) 5 bis 45 Gew.-% hydroxyfunktionellen Monomeren,
b3) 0 bis 20 Gew.-% sonstigen Monomeren und
b4) 0 bis 6 Gew.-% säurefunktionellen Monomeren und
A3) 5 bis 60 Gew.-% eines hydroxy- und carboxyfunktionellen Copolymerisats mit einer OH-Zahl von 30 bis 220 mg KOH/g Feststoff und einer Säurezahl von 25 bis 200 mg KOH/g Feststoff aus
b1) 45 bis 90 Gew.-% (Meth)acrylsäureestem und/oder Vinylaromaten,
b2) 5 bis 50 Gew.-% hydroxyfunktionellen Monomeren,
b3) 0 bis 20 Gew.-% sonstigen Monomeren und
b4) 2,5 bis 30 Gew.-% säurefunktionellen Monomeren,
wobei die Summe aus A1), A2) und A3) bzw. die Summe aus b1), b2), b3) und ggf. b4) jeweils 100% beträgt und wobei das Verhältnis der Säurezahlen A3) : A2) größer 1 : 1 ist..

3. Wässrige Bindemitteldispersion A), gemäß Anspruch 1, **dadurch gekennzeichnet, dass**, bezogen auf Feststoff, enthalten sind
A1) 6,5 bis 25 Gew.-% mindestens eines hydroxyfunktionellen Polyethers mit einer Funktionalität von 2,0 bis 4,0, einer Viskosität bei 23°C von ≤ 2.000 mPa.s, einem Molekulargewicht Mₙ von 200 bis 3.500 und einer OH-Zahl von 50 bis 700 mg KOH/g Feststoff,
A2) 45 bis 85 Gew.-% eines hydroxyfunktionellen Copolymerisats mit einer OH-Zahl von 30 bis 120 mg KOH/g Feststoff und einer Säurezahl von 0 bis 25 mg KOH/g Feststoff aus
b1) 70 bis 93 Gew.-% (Meth)acrylsäureestern und/oder Vinylaromaten,
b2) 7 bis 25 Gew.-% hydroxyfunktionellen Monomere und
b4) 0 bis 2 Gew.-% säurefunktionellen Monomeren und
A3) 7,5 bis 45 Gew.-% eines hydroxy- und carboxyfunktionellen Copolymerisats mit einer OH-Zahl von 40 bis 160 mg KOH/g Feststoff und einer Säurezahl von 30 bis 150 mg KOH/g Feststoffaus
b1) 50 bis 85 Gew.-% (Meth)acrylsäureestem und/oder Vinylaromaten,
b2) 10 bis 45 Gew.-% hydroxyfunktionellen Monomeren und
b4) 4 bis 25 Gew.-% säurefunktionellen Monomeren,
wobei die Summe aus A1), A2) und A3) bzw. die Summe aus b1), b2) und ggf. b4) jeweils 100 % beträgt und wobei das Verhältnis der Säurezahlen A3) : A2) größer 2 : 1 ist, wobei die Säurezahl der Dispersion A) 10 bis 33 mg KOH/g Feststoff und die OH-Zahl 45 bis 160 mg KOH/g Feststoff beträgt.

4. Wässrige Bindemitteldispersion A), gemäß Anspruch 1, **dadurch gekennzeichnet, dass**, bezogen auf Feststoff, enthalten sind
A1) 8 bis 14 Gew.-% mindestens eines hydroxyfunktionellen Polyethers auf Basis von Ethylen- und/oder Propylenoxid mit einer Funktionalität von 2,0 bis 3,0, einer Viskosität bei 23°C von ≤ 2.000 mPa.s, einem Molekulargewicht Mₙ von 200 bis 3.500 und einer OH-Zahl von 100 bis 600 mg KOH/g Feststoff.
A2) 55 bis 80 Gew.-% eines hydroxyfunktionellen Copolymerisats mit einer OH-Zahl von 35 bis 90 mg KOH/g Feststoff und einer Säurezahl von 0 bis 2 mg KOH/g Feststoff aus
b1) 78 bis 92 Gew.-% (Meth)acrylsäureestem und/oder Vinylaromaten,
b2) 8 bis 20 Gew.-% hydroxyfunktionellen Monomeren und
A3) 10 bis 32 Gew.-% eines hydroxy- und carboxyfunktionellen Copolymerisats mit einer OH-Zahl von 60 bis 140 mg KOH/g Feststoff und einer Säurezahl von 40 bis 120 mg KOH/g Feststoff aus
b1) 55 bis 80 Gew.-% (Meth)acrylsäureestem und/oder Vinylaromaten
b2) 15 bis 35 Gew.-% hydroxyfunktionellen Monomeren,
b4) 5 bis 20 Gew.-% säurefunktionellen Monomeren,
wobei die Summe aus A1), A2) und A3) bzw. die Summe aus b1), b2) und b4) jeweils 100 % beträgt und wobei das Verhältnis der Säurezahlen A3) : A2) größer 4 : 1 ist, und wobei die Säurezahl der Dispersion A) 12 bis 22 mg KOH/g Feststoff beträgt.

5. Wässrige Bindemitteldispersion A), gemäß Anspruch 1, **gekennzeichnet dadurch**, dass, bezogen auf Feststoff, enthalten sind
A1) 8 bis 14 Gew.-% mindestens eines hydroxyfunktionellen Polyethers auf Basis von Ethylenoxid- und/oder Propylenoxid und Propylenglykol, Trimethylolpropan, Diethylenglykol und/oder Glycerin, mit einer Funktionalität von 2,0 bis 3,0, einer Viskosität bei 23°C von ≤ 2.000 mPa.s, einem Molekulargewicht Mₙ von 200 bis 3.100 und einer OH-Zahl von 150 bis 560 mg KOH/g Feststoff,
A2) 55 bis 80 Gew.-% eines hydroxyfunktionellen Copolymerisats mit einer OH-Zahl von 35 bis 90 mg KOH/g Feststoff und einer Säurezahl von 0 bis 2 mg KOH/g Feststoff aus
b1) 78 bis 92 Gew.-% Butylacrylat, Methylmethacrylat und/oder Styrol und
b2) 8 bis 20 Gew.-% Hydroxyethylmethacrylat oder Hydroxypropyl(meth)acrylat und
A3) 10 bis 32 Gew.-% eines hydroxy- und carboxyfunktionellen Copolymerisats mit einer OH-Zahl von 60 bis 140 mg KOH/g Feststoff und einer Säurezahl von 40 bis 120 mg KOH/g Feststoff aus
b1) 55 bis 80 Gew.-% Butylacrylat, Methylmethacrylat und/oder Styrol,
b2) 15 bis 35 Gew.-% Hydroxyethyl(meth)acrylat oder Hydroxypropyl(meth)acrylat und
b4) 5 bis 20 Gew.-% (Meth)acrylsäure,
wobei die Summe aus A1), A2) und A3) bzw. die Summe aus b1), b2) und b4) jeweils 100 % beträgt, wobei carboxylfunktionelle Monomere nur in A3) enthalten sind und wobei der Festkörpergehalt der Dispersion A) größer 38 % ist, die Säurezahl 12 bis 22 mg KOH/g Feststoff und die OH-Zahl 65 bis 120 mg KOH/g Feststoff beträgt.

6. Wässrige Bindemittelkombination gemäß Anspruch 1, bestehend im wesentlichen aus 55 bis 97 Gew.-% wässrigen Bindemitteldispersionen A), gemäß den Ansprüchen 1 bis 5 und 3 bis 45 Gew.-% mindestens eines Vernetzerharzes aus der Gruppe der Aminoplastharze und/oder blockierter Polyisocyanate.

7. Wässrige 2-Komponenten-Bindemittelkombination gemäß Anspruch 1, bestehend im wesentlichen aus 55 bis 97 Gew.-% wässrigen Bindemitteldispersionen A), gemäß den Ansprüchen 1 bis 5 und 3 bis 45 Gew.-% mindestens eines Polyisocyanates, welches freie Isocyanatgruppen und ggf. hydrophile Gruppen enthält.

8. Verfahren zur Herstellung wässriger Bindemitteldispersionen gemäß Anspruch 1 mit niedrigem Lösemittelgehalt, gemäß Anspruch 1, **dadurch gekennzeichnet, dass** in Gegenwart von 2 bis 30 Gew.-% eines hydroxyfunktionellen Polyethers A1), mit einer Funktionalität von 1,8 bis 6,0, einer Viskosität bei 23°C von ≤ 4.000 mPa.s, einem Molekulargewicht Mₙ von 152 bis 4.000 und einer OH-Zahl von 50 bis 700 mg KOH/g Feststoff zunächst eine radikalisch initiierte Copolymerisation von
b1) (Meth)acrylsäureestern und/oder Vinylaromaten,
b2) hydroxyfunktionellen Monomeren,
b3) sonstigen Monomeren und
b4) gegebenenfalls säurefunktionellen Monomeren
in einer Menge von 35 bis 90 Gew.-% zu einem hydroxyfünktionellen Copolymerisat A2) mit einer OH-Zahl von 20 bis 220 mg KOH/g Feststoff und einer Säurezahl von 0 bis 50 mg KOH/g Feststoff und im Anschluss daran, eine weitere radikalisch initiierte Copolymerisation von
b1) (Meth)acrylsäureestern und/oder Vinylaromaten,
b2) hydroxyfunktionellen Monomeren,
b3) sonstigen Monomeren,
b4) säurefunktionellen Monomeren
in einer Menge von 5 bis 60 Gew.-% zu einem hydroxy- und carboxyfunktionellen Copolymerisat A3) mit einer OH-Zahl von 30 bis 220 mg KOH/g Feststoff und einer Säurezahl von 25 bis 200 mg KOH/g Feststoff durchgeführt wird und im Anschluss daran, durch Zugabe eines Neutralisationsmittels 40 bis 100% der Carboxylgruppen in Carboxylatgruppen überführt werden und das so erhaltene Bindemittel in Wasser dispergiert wird, wobei wässrige Dispersionen A) mit einem Festkörpergehalt von größer als 35 Gew.-% und einem Gehalt an organischen Lösemitteln von weniger als 6 Gew.-% resultieren und wobei die Summe aus A1), A2) und A3) 100% ergibt.

9. Verwendung der wässrigen Bindemitteldispersionen in durch chemische Reaktion venetzende, pigmentierte Einbrennlacke mit Lösemittelgehalten von weniger als 5 Gew.-% und Festkörpergehalten von mehr als 55 Gew.-%.

## Claims

1. Aqueous, crosslinkable binder dispersion A) with a low solvent content, **characterised in** it contains, relative to solids,
A1) 2 to 30 wt.% of at least one hydroxy-functional polyether with a functionality of 1.8 to 6.0, a molecular weight Mₙ of 152 to 4000 and an OH value of 50 to 700 mg of KOH/g of solids,
A2) 35 to 90 wt.% of a hydroxy-functional copolymer with an OH value of 20 to 220 mg of KOH/g of solids and an acid value of 0 to 50 mg of KOH/g of solids prepared from
b1) (meth)acrylic acid esters and/or vinyl aromatics,
b2) hydroxy-functional monomers,
b3) optionally other monomers,
b4) optionally acid-functional monomers and
A3) 5 to 60 wt.% of a hydroxy- and carboxy-functional copolymer with an OH value of 30 to 220 mg of KOH/g of solids and an acid value of 25 to 200 mg of KOH/g of solids prepared from
b1) (meth)acrylic acid esters and/or vinyl aromatics,
b2) hydroxy-functional monomers,
b3) optionally other monomers and
b4) acid-functional monomers,
wherein the sum of A1), A2) and A3) and the sum of b1), b2), b3) and b4) is in each case 100%, wherein the ratio of the acid values A3):A2) is greater than 1:1, wherein the acid value of dispersion A) is 8 to 45 mg of KOH/g of solids, the OH value is 25 to 200 mg of KOH/g of solids and the solids content is greater than 35 wt.%.

2. Aqueous binder dispersion A) according to claim 1, **characterised in that** it contains, relative to solids,
A1) 6.5 to 25 wt.% of at least one hydroxy-functional polyether with a functionality of 1.8 to 6.0, a viscosity at 23°C of ≤ 4000 mPa.s, a molecular weight Mₙ of 152 to 4000 and an OH value of 50 to 700 mg of KOH/g of solids,
A2) 35 to 90 wt.% of a hydroxy-functional copolymer with an OH value of 20 to 220 mg of KOH/g of solids and an acid value of 0 to 50 mg of KOH/g of solids prepared from
b1) 60 to 95 wt.% of (meth)acrylic acid esters and/or vinyl aromatics,
b2) 5 to 45 wt.% of hydroxy-functional monomers,
b3) 0 to 20 wt.% of other monomers and
b4) 0 to 6 wt.% of acid-functional monomers and
A3) 5 to 60 wt.% of a hydroxy- and carboxy-functional copolymer with an OH value of 30 to 220 mg of KOH/g of solids and an acid value of 25 to 200 mg of KOH/g of solids prepared from
b1) 45 to 90 wt.% of (meth)acrylic acid esters and/or vinyl aromatics,
b2) 5 to 50 wt.% of hydroxy-functional monomers,
b3) 0 to 20 wt.% of other monomers and
b4) 2.5 to 30 wt.% of acid-functional monomers,
wherein the sum of A1), A2) and A3) and the sum of b1), b2), b3) and optionally b4) is in each case 100% and wherein the ratio of the acid values A3):A2) is greater than 1:1.

3. Aqueous binder dispersion A) according to claim 1, **characterised in that** it contains, relative to solids,
A1) 6.5 to 25 wt.% of at least one hydroxy-functional polyether with a functionality of 2.0 to 4.0, a viscosity at 23°C of ≤ 2000 mPa.s, a molecular weight Mₙ of 200 to 3500 and an OH value of 50 to 700 mg of KOH/g of solids,
A2) 45 to 85 wt.% of a hydroxy-functional copolymer with an OH value of 30 to 120 mg of KOH/g of solids and an acid value of 0 to 25 mg of KOH/g of solids prepared from
b1) 70 to 93 wt.% of (meth)acrylic acid esters and/or vinyl aromatics,
b2) 7 to 25 wt.% of hydroxy-functional monomers and
b4) 0 to 2 wt.% of acid-functional monomers and
A3) 7.5 to 45 wt.% of a hydroxy- and carboxy-functional copolymer with an OH value of 40 to 160 mg of KOH/g of solids and an acid value of 30 to 150 mg of KOH/g of solids prepared from
b1) 50 to 85 wt.% of (meth)acrylic acid esters and/or vinyl aromatics,
b2) 10 to 45 wt.% of hydroxy-functional monomers and
b4) 4 to 25 wt.% of acid-functional monomers,
wherein the sum of A1), A2) and A3) and the sum of b1), b2) and optionally b4) is in each case 100% and wherein the ratio of the acid values A3) :A2) is greater than 2:1, wherein the acid value of dispersion A) is 10 to 33 mg of KOH/g of solids and the OH value is 45 to 160 mg of KOH/g of solids.

4. Aqueous binder dispersion A) according to claim 1, **characterised in that** it contains, relative to solids,
A1) 8 to 14 wt.% of at least one hydroxy-functional polyether based on ethylene oxide and/or propylene oxide with a functionality of 2.0 to 3.0, a viscosity at 23°C of ≤ 2000 mPa.s, a molecular weight Mₙ of 200 to 3500 and an OH value of 100 to 600 mg of KOH/g of solids,
A2) 55 to 80 wt.% of a hydroxy-functional copolymer with an OH value of 35 to 90 mg of KOH/g of solids and an acid value of 0 to 2 mg of KOH/g of solids prepared from
b1) 78 to 92 wt.% of (meth)acrylic acid esters and/or vinyl aromatics,
b2) 8 to 20 wt.% of hydroxy-functional monomers and
A3) 10 to 32 wt.% of a hydroxy- and carboxy-functional copolymer with an OH value of 60 to 140 mg of KOH/g of solids and an acid value of 40 to 120 mg of KOH/g of solids prepared from
b1) 55 to 80 wt.% of (meth)acrylic acid esters and/or vinyl aromatics,
b2) 15 to 35 wt.% of hydroxy-functional monomers,
b4) 5 to 20 wt.% of acid-functional monomers,
wherein the sum of A1), A2) and A3) and the sum of b1), b2) and b4) is in each case 100% and wherein the ratio of the acid values A3):A2) is greater than 4:1 and wherein the acid value of dispersion A) is 12 to 22 mg of KOH/g of solids.

5. Aqueous binder dispersion A) according to claim 1, **characterised in that** it contains, relative to solids,
A1) 8 to 14 wt.% of at least one hydroxy-functional polyether based on ethylene oxide and/or propylene oxide and propylene glycol, trimethylolpropane, diethylene glycol and/or glycerol, with a functionality of 2.0 to 3.0, a viscosity at 23°C of ≤ 2000 mPa.s, a molecular weight Mₙ of 200 to 3100 and an OH value of 150 to 560 mg of KOH/g of solids,
A2) 55 to 80 wt.% of a hydroxy-functional copolymer with an OH value of 35 to 90 mg of KOH/g of solids and an acid value of 0 to 2 mg of KOH/g of solids prepared from
b1) 78 to 92 wt.% of butyl acrylate, methyl methacrylate and/or styrene and
b2) 8 to 20 wt.% of hydroxyethyl methacrylate or hydroxypropyl (meth) acrylate and
A3) 10 to 32 wt.% of a hydroxy- and carboxy-functional copolymer with an OH value of 60 to 140 mg of KOH/g of solids and an acid value of 40 to 120 mg of KOH/g of solids prepared from
b1) 55 to 80 wt.% of butyl acrylate, methyl methacrylate and/or styrene,
b2) 15 to 35 wt.% of hydroxyethyl (meth)acrylate or hydroxypropyl (methacrylate) and
b4) 5 to 20 wt.% of (meth)acrylic acid,
wherein the sum of A1), A2) and A3) and the sum of b1), b2) and b4) is in each case 100%, wherein only A3) contains carboxy-functional monomers and wherein the solids content of dispersion A) is greater than 38%, the acid value is 12 to 22 mg of KOH/g of solids and the OH value is 65 to 120 mg of KOH/g of solids.

6. Aqueous binder combination according to claim 1, substantially consisting of 55 to 97 wt.% of aqueous binder dispersions A) according to claims 1 to 5 and 3 to 45 wt.% of at least one crosslinking resin from the group comprising amino resins and/or blocked polyisocyanates.

7. Aqueous 2-component binder combination according to claim 1, substantially consisting of 55 to 97 wt.% of aqueous binder dispersions A) according to claims 1 to 5 and 3 to 45 wt.% of at least one polyisocyanate which contains free isocyanate groups and optionally hydrophilic groups.

8. Process for the production of aqueous binder dispersions according to claim 1 with a low solvent content according to claim 1, **characterised in that** a free-radically initiated copolymerisation of
b1) (meth)acrylic acid esters and/or vinyl aromatics,
b2) hydroxy-functional monomers,
b3) other monomers,
b4) optionally acid-functional monomers,
in a quantity of 35 to 90 wt.% is initially performed in the presence of 2 to 30 wt.% of a hydroxy-functional polyether A1) with a functionality of 1.8 to 6.0, a viscosity at 23°C of ≤ 4000 mPa.s, a molecular weight Mₙ of 152 to 4000 and an OH value of 50 to 700 mg of KOH/g of solids, to yield a hydroxy-functional copolymer A2) with an OH value of 20 to 220 mg of KOH/g of solids and an acid value of 0 to 50 mg of KOH/g of solids and, thereafter, a further free-radically initiated copolymerisation of
b1) (meth)acrylic acid esters and/or vinyl aromatics,
b2) hydroxy-functional monomers,
b3) other monomers,
b4) acid-functional monomers,
in a quantity of 5 to 60 wt.% is then performed to yield a hydroxy- and carboxy-functional copolymer A3) with an OH value of 30 to 220 mg of KOH/g of solids and an acid value of 25 to 200 mg of KOH/g of solids and, thereafter, 40 to 100% of the carboxyl groups are converted into carboxylate groups by adding a neutralising agent and the binder obtained in this manner is dispersed in water, wherein aqueous dispersions A) are produced with a solids content of greater than 35 wt.% and an organic solvent content of less than 6 wt.% and wherein the sum of A1), A2) and A3) is 100%.

9. Use of the aqueous binder dispersions in chemically crosslinking, pigmented stoving lacquers with solvent contents of less than 5 wt.% and solids contents of greater than 55 wt.%.

## Revendications

1. Dispersion aqueuse de liant réticulable A), à faible teneur en solvant, **caractérisée en ce que**, sur les matières solides, elle contient
A1) 2 à 30 % en poids d'au moins un polyéther à fonctions hydroxy, fonctionnalité 1,8 à 6,0, poids moléculaire Mₙ 152 à 4 000 et indice d'OH 50 à 700 mg de KOH/g de matières solides,
A2) 35 à 90 % en poids d'un copolymère à fonctions hydroxy, indice d'OH 20 à 220 mg de KOH/g de matières solides et indice d'acide 0 à 50 mg de KOH/g de matières solides, constitué de
b1) des esters (méth)acryliques et/ou des dérivés vinylaromatiques,
b2) des monomères à fonctions hydroxy,
b3) le cas échéant d'autres monomères,
b4) le cas échéant des monomères à fonctions acides et
A3) 5 à 60 % en poids d'un copolymère à fonctions hydroxy et carboxyle, indice d'OH 30 à 220 mg de KOH/g de matières solides et indice d'acide 25 à 200 mg de KOH/g de matières solides, constitué de
b1) des esters (méth)acryliques et/ou des dérivés vinylaromatiques,
b2) des monomères à fonctions hydroxy,
b3) éventuellement d'autres monomères et
b4) des monomères à fonctions acides,
les sommes de A1), A2) et A3) d'une part, de b1), b2), b3) et b4) d'autre part représentant 100 % dans les deux cas, le rapport entre les indices d'acide de A3)/A2) étant supérieur à 1:1, l'indice d'acide de la dispersion A) allant de 8 à 45 mg de KOH/g de matières solides, l'indice d'OH de 25 à 200 mg de KOH/g de matières solides et la teneur en matières solides étant supérieure à 35 % en poids.

2. Dispersion aqueuse de liant A) selon revendication 1, **caractérisée en ce que**, sur les matières solides, elle contient
A1) 6,5 à 25 % en poids d'au moins un polyéther à fonctions hydroxy, de fonctionnalité 1,8 à 6,0, viscosité à 23°C ≤ 4 000 mPa.s, poids moléculaire Mₙ 152 à 4 000 et indice d'OH 50 à 700 mg de KOH/g de matières solides,
A2) 35 à 90 % en poids d'un copolymère à fonctions hydroxy, d'indice d'OH 20 à 220 mg de KOH/g de matières solides, indice d'acide 0 à 50 mg de KOH/g de matières solides, constitué de
b1) 60 à 95 % en poids d'esters (méth)acryliques et/ou de dérivés vinylaromatiques,
b2) 5 à 45 % en poids de monomères à fonctions hydroxy,
b3) 0 à 20 % en poids d'autres monomères et
b4) 0 à 6 % en poids de monomères à fonctions acides et
A3) 5 à 60 % en poids d'un copolymère à fonctions hydroxy et carboxy, indice d'OH 30 à 220 mg de KOH/g de matières solides et indice d'acide 25 à 200 mg de KOH/g de matières solides, constitué de
b1) 45 à 90 % en poids d'esters (méth)acryliques et/ou de dérivés vinylaromatiques,
b2) 5 à 50 % en poids de monomères à fonctions hydroxy,
b3) 0 à 20 % en poids d'autres monomères et
b4) 2,5 à 30 % en poids de monomères à fonctions acides,
la somme de A1), A2) et A3) d'une part et la somme de b1), b2), b3) et éventuellement b4) d'autre part représentant 100 % dans les deux cas, et le rapport entre les indices d'acides de A3)/A2) étant supérieur à 1:1.

3. Dispersion aqueuse de liant A) selon revendication 1, **caractérisée en ce que**, sur les matières solides, elle contient
A1) 6,5 à 25 % en poids d'au moins un polyéther à fonctions hydroxy, de fonctionnalité 2,0 à 4,0, viscosité à 23°C ≤ 2 000 mPa.s, poids moléculaire Mₙ 200 à 3 500 et indice d'OH 50 à 700 mg de KOH/g de matières solides,
A2) 45 à 85 % en poids d'un copolymère à fonctions hydroxy, indice d'OH 30 à 120 mg de KOH/g de matières solides, indice d'acide 0 à 25 mg de KOH/g de matières solides, constitué de
b1) 70 à 93 % en poids d'esters (méth)acryliques et/ou de dérivés vinylaromatiques,
b2) 7 à 25 % en poids de monomères à fonctions hydroxy et
b4) 0 à 2 % en poids de monomères à fonction acides et
A3) 7,5 à 45 % en poids d'un copolymère à fonctions hydroxy et carboxy, d'indice d'OH 40 à 160 mg de KOH/g de matières solides, indice d'acide 30 à 150 mg de KOH/g de matières solides, constitué de
b1) 50 à 85 % en poids d'esters (méth)acryliques et/ou de dérivés vinylaromatiques,
b2) 10 à 45 % en poids de monomères à fonctions hydroxy et
b4) 4 à 25 % en poids de monomères à fonctions acides,
les sommes de A1), A2) et A3) d'une part, de b1), b2) et éventuellement b4) d'autre part représentant 100 %, le rapport des indices d'acide de A3)/A2) est supérieur à 2:1 et l'indice d'acide de la dispersion A) va de 10 à 33 mg de KOH/g de matières solides, et l'indice d'OH de 45 à 160 mg de KOH/g de matières solides.

4. Dispersion aqueuse de liant A) selon la revendication 1, **caractérisée en ce que**, sur les matières solides, elle contient
A1) 8 à 14 % en poids d'au moins un polyéther à fonctions hydroxy, à base d'oxyde d'éthylène et/ou d'oxyde de propylène, à une de fonctionnalité 2,0 à 3,0, une viscosité à 23°C ≤ 2 000 mPa.s, poids moléculaire Mₙ 200 à 3 500, indice d'OH 100 à 600 mg de KOH/g de matières solides,
A2) 55 à 80 % en poids d'un copolymère à fonctions hydroxy, d'indice d'OH 35 à 90 mg de KOH/g de matières solides et indice d'acide 0 à 2 mg de KOH/g de matières solides, constitué de
b1) 78 à 92 % en poids d'esters (méth)acryliques et/ou de dérivés vinylaromatiques,
b2) 8 à 20 % en poids de monomères à fonctions hydroxy et
A3) 10 à 32 % en poids d'un copolymère à fonctions hydroxy et carboxy, d'indice d'OH 60 à 140 mg de KOH/g de matières solides, indice d'acide 40 à 120 mg de KOH/g de matières solides, constitué de
b1) 55 à 80 % en poids d'esters (méth)acryliques et/ou de dérivés vinylaromatiques,
b2) 15 à 35 % en poids de monomères à fonctions hydroxy,
b4) 5 à 20 % en poids de monomères à fonctions acides,
la somme de A1), A2) et A3) d'une part, de b1), b2) et b4) d'autre part représentant 100 %, le rapport des indices d'acide de A3)/A2) étant supérieur à 4:1 et l'indice d'acide de la dispersion A) allant de 12 à 22 mg de KOH/g de matières solides.

5. Dispersion aqueuse de liant A) selon la revendication 1, **caractérisée en ce que**, sur les matières solides, elle contient
A1) 8 à 14 % en poids d'au moins un polyéther à fonctions hydroxy, à base de l'oxyde d'éthylène et/ou de l'oxyde de propylène et du propylèneglycol, du triméthylolpropane, du diéthylèneglycol et/ou du glycérol, à une fonctionnalité de 2,0 à 3,0, une viscosité à 23°C ≤ 2 000 mPa.s, un poids moléculaire Mₙ de 200 à 3 100 et un indice d'OH de 150 à 560 mg de KOH/g de matières solides,
A2) 55 à 80 % en poids d'un copolymère à fonctions hydroxy, d'indice d'OH 35 à 90 mg de KOH/g de matières solides, indice d'acide 0 à 2 mg de KOH/g de matières solides, constitué de
b1) 78 à 92 % en poids d'acrylate de butyle, de méthacrylate de méthyle et/ou de styrène et
b2) 8 à 20 % en poids de méthacrylate d'hydroxyéthyle ou de (méth)acrylate d'hydroxypropyle et
A3) 10 à 32 % en poids d'un copolymère à fonctions hydroxy et carboxy, d'indice d'OH 60 à 140 mg de KOH/g de matières solides, indice d'acide 40 à 120 mg de KOH/g de matières solides, constitué de
b1) 55 à 80 % en poids d'acrylate de butyle, de méthacrylate de méthyle et/ou de styrène,
b2) 15 à 35 % en poids de (méth)acrylate d'hydroxyéthyle ou de (méth)acrylate d'hydroxypropyle et
b4) 5 à 20 % en poids d'acides (méth)acryliques,
la somme de A1), A2) et A3) d'une part, de b1), b2) et b4) d'autre part représentant dans les deux cas 100 %, les monomères à fonctions carboxyle n'étant contenus que dans A3), la teneur en matières solides de la dispersion A) est supérieure à 38 %, l'indice d'acide va de 12 à 22 mg de KOH/g de matières solides et l'indice d'OH de 65 à 120 mg de KOH/g de matières solides.

6. Liant aqueux combiné selon la revendication 1, qui consiste essentiellement en 55 à 97 % en poids d'une dispersion aqueuse de liant A) selon les revendications 1 à 5, et 3 à 45 % en poids d'au moins une résine réticulante du groupe des résines aminoplastes et/ou des polyisocyanates bloqués.

7. Liant aqueux combiné à deux composants selon la revendication 1, consistant essentiellement en 55 à 97 % en poids d'une dispersion aqueuse de liant A) selon les revendications 1 à 5, et 3 à 45 % en poids d'au moins un polyisocyanate contenant des groupes isocyanate libres et le cas échéant des groupes hydrophiles.

8. Procédé pour la préparation des dispersions aqueuses de liant selon la revendication 1, à faible teneur en solvant selon la revendication 1, **caractérisé en ce que**, en présence de 2 à 30 % en poids d'un polyéther à fonctions hydroxy A1), à une fonctionnalité de 1,8 à 6,0, une viscosité à 23°C ≤ 4 000 mPa.s, un poids moléculaire Mₙ de 152 à 4 000 et un indice d'OH de 50 à 700 mg de KOH/g de matières solides, on procède d'abord à une copolymérisation radicalaire de
b1) des esters (méth)acryliques et/ou des dérivés vinylaromatiques,
b2) des monomères à fonctions hydroxy,
b3) d'autres monomères et
b4) le cas échéant des monomères à fonctions acides,
en quantité de 35 à 90 % en poids, la copolymérisation donnant un copolymère à fonctions hydroxy A2) d'indice d'OH 20 à 220 mg de KOH/g de matières solides et d'indice d'acide 0 à 50 mg de KOH/g de matières solides, à la suite de quoi on procède à une autre copolymérisation radicalaire de
b1) des esters (méth)acryliques et/ou des dérivés vinylaromatiques,
b2) des monomères à fonctions hydroxy,
b3) d'autres monomères,
b4) des monomères à fonctions acides,
en quantité de 5 à 60 % en poids, cette copolymérisation donnant un copolymère à fonctions hydroxy et carboxy A3), d'indice d'OH 30 à 220 mg de KOH/g de matières solides, indice d'acide 25 à 200 mg de KOH/g de matières solides, après quoi, par addition d'un agent neutralisant, on convertit 40 à 100 % des groupes carboxyle en groupes carboxylate et on disperse le liant ainsi obtenu dans l'eau, à l'état de dispersion aqueuse A) à une teneur en matières solides supérieure à 35 % en poids et une teneur en solvants organiques inférieure à 6 % en poids, étant précisé que la somme de A1), A2) et A3) représente 100 %.

9. Utilisation des dispersions aqueuses de liant dans des peintures pigmentées à cuire au four réticulant par réaction chimique à des teneurs en solvant inférieures à 5 % en poids et des teneurs en matières solides supérieures à 55 % en poids.
